# EUROPEAN PATENT SPECIFICATION

(11) **EP 3 437 425 B1**
(45) Date of publication and mention of the grant of the patent: **15.09.2021**
(21) Application number: 16897447.5
(22) Date of filing: 29.09.2016
(51) Int. Cl.: H04W 76/19, H04W 76/11, H04W 8/26

(54) **DEVICES AND COMPUTER READABLE MEDIUM FOR RESUME FAILURE FALLBACK**
VORRICHTUNGEN UND RECHNERLESBARES MEDIUM ZUR WIEDERAUFNAHME EINES AUSFALLALTERNATIVPROZESSES
DISPOSITIFS ET SUPPORT LISIBLE PAR ORDINATEUR SUR ÉCHEC DE REPRISE

(30) Priority: 01.04.2016 US 201662317348 P
(43) Date of publication of application: 06.02.2019
(73) Proprietor: Apple Inc., Cupertino, CA 95014 (US)
(72) Inventor: PALAT, Sudeep K., Cheltenham Gloucestershire GL51 0GG (GB); BANGOLAE, Sangeetha L., Beaverton, Oregon 97007 (US); MARTINEZ TARRADELL, Marta, Hillsboro, Oregon 97124 (US); BURBIDGE, Richard C., Shrivenham Oxfordshire SN6 8HR (GB)
(74) Representative: Lang, Johannes
(86) International application number: PCT/US2016/054426
(87) International publication number: WO 2017/171924

(56) References cited:
- EP-A1- 2 645 803
- WO-A1-2015/116877
- US-A1- 2013 260 810
- US-A1- 2015 017 980
- US-A1- 2015 312 809
- ERICSSON: "draft CR for RRC Connection Suspend and Resume", 3GPP DRAFT; R2-161744 - DRAFT CR FOR RRC CONNECTION SUSPEND AND RESUME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. St. Julian's, Malta; 20160215 - 20160219 14 February 2016 (2016-02-14), XP051065996, Retrieved from the Internet: URL:http://www.3gpp.org/ftp/tsg_ran/WG2_RL 2/TSGR2_93/Docs/ [retrieved on 2016-02-14]
- ERICSSON ET AL: "On RRC Resume ID", 3GPP DRAFT; RP-160528 ON RRC RESUME ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Gothenburg; 20160307 - 20160310 8 March 2016 (2016-03-08), XP051658356, Retrieved from the Internet: URL:http://www.3gpp.org/ftp/tsg%5Fran/TSG% 5FRAN/TSGR%5F71/Docs/RP%2D160528%2Ezip [retrieved on 2016-03-08]
- ERICSSON: "User plane based solution with AS information stored in RAN", 3GPP DRAFT; R3-152686, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Anaheim, CA, U.S.; 20151116 - 20151120 16 November 2015 (2015-11-16), XP051007556, Retrieved from the Internet: URL:http://www.3gpp.org/ftp/Meetings_3GPP_ SYNC/RAN3/Docs/ [retrieved on 2015-11-16]
- HUAWEI: "Summary of email discussion: [NBAH#04][NBIOT/Resume] RRC Functions for suspend - resume", 3GPP DRAFT; R2-161166 SUMMARY OF EMAIL DISCUSSION ON UP SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. St. Julian's, Malta; 20160215 - 20160219 19 February 2016 (2016-02-19), XP051066148, Retrieved from the Internet: URL:http://www.3gpp.org/ftp/tsg_ran/WG2_RL 2/TSGR2_93/Docs/ [retrieved on 2016-02-19]
- ASUSTEK: "Consideration on resume failure of UP solution", 3GPP DRAFT; R2-160438 CONSIDERATION ON RESUME FAILURE OF UP SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. Budapest, HU; 20160119 - 20160121 18 January 2016 (2016-01-18), XP051054726, Retrieved from the Internet: URL:http://www.3gpp.org/ftp/Meetings_3GPP_ SYNC/RAN2/Docs/ [retrieved on 2016-01-18]
- HUAWEI ET AL: "Discussion on Msg3 Size", 3GPP DRAFT; R2-161378 DISCUSSION ON MSG3 SIZE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20160215 - 20160219 14 February 2016 (2016-02-14), XP051055276, Retrieved from the Internet: URL:http://www.3gpp.org/ftp/Meetings_3GPP_ SYNC/RAN2/Docs/ [retrieved on 2016-02-14]
- ERICSSON: "Security for RRC Connection Suspend and Resume procedure in solution 18 for Narrow Band CIoT", 3GPP DRAFT; S3-160157_NBCIOT_DISCUSSION PAPER_RRC CONNECTION SUSPEND AND RESUME, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. SA WG3, no. Dubrovnik, Croatia; 20160201 - 20160205 31 January 2016 (2016-01-31), XP051060426, Retrieved from the Internet: URL:http://www.3gpp.org/ftp/Meetings_3GPP_ SYNC/SA3/Docs/ [retrieved on 2016-01-31]
- QUALCOMM INCORPORATED: "Impact of DoNAS on S1AP UE-Associated Procedures", 3GPP DRAFT; R3-160078 CP OPTO IMPACT UE ASSOCIATED S1AP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Budapest, HU; 20160120 - 20160122 11 January 2016 (2016-01-11), XP051067018, Retrieved from the Internet: URL:http://www.3gpp.org/ftp/tsg_ran/WG3_Iu /TSGR3_AHGs/R3_AHG_NB-IOT/Docs/ [retrieved on 2016-01-11]
- "3rd Generation Partnership Project; Technical Specification Group Services and System Aspects; Study on architecture enhancements for Cellular Internet of Things (Release 13)", 3GPP STANDARD ; TECHNICAL REPORT ; 3GPP TR 23.720, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.0.0, 15 March 2016 (2016-03-15), pages 1-97, XP051295071, [retrieved on 2016-03-15]

## Description

This application claims the benefit of priority to United States Provisional Patent Application Serial No. 62/317,348 filed April 1, 2016, and entitled "SUPPORTING OPTIMIZED RESUME FAILURE FALLBACK MECHANISM".

### TECHNICAL FIELD

The invention pertains to wireless communications. Some embodiments relate to providing data in cellular and wireless local area network (WLAN) networks, including Third Generation Partnership Project Long Term Evolution (3GPP LTE) networks and LTE advanced (LTE-A) networks as well as 4th generation (4G) networks and 5th generation (5G) networks, all of which are hereinafter referred to as LTE networks. Some embodiments not being part of the invention relate to cellular Internet of Things (CIoT) systems for low data rate communications between devices.

### BACKGROUND

The use of 3 GPP LTE systems (including LTE and LTE-Advanced systems) has increased due to an increase in both the types of user equipment (UEs) using network resources and the amount of data and bandwidth being used by various applications, such as video streaming, operating on these UEs. As a result, 3GPP LTE systems continue to develop, with the next- generation wireless communication system, 5G, aiming to answer the ever-increasing demand for bandwidth. In addition, within this environment, certain devices have alternative usage profiles other than previously common video streaming, voice, and active user communications.

The following prior art documents disclose developments regarding RRC features: ERICSSON, "draft CR for RRC Connection Suspend and Resume", vol. RAN WG2, 3GPP DRAFT; R2-161744.

ERICSSON ET AL, "On RRC Resume ID", vol. TSG RAN, no. Gothenburg; 3GPP DRAFT; RP-160528.

ERICSSON, "User plane based solution with AS information stored in RAN", vol. RAN WG3, no. Anaheim, CA, U.S.; 3GPP DRAFT; R3-152686.

HUAWEI, "Summary of email discussion: [NBAH#04][NBIOT/Resume] RRC Functions for suspend - resume", vol. RAN WG2, no. St. Julian's, Malta; 3GPP DRAFT; R2-161166.

ASUSTEK, "Consideration on resume failure of UP solution", vol. RAN WG2, no. Budapest, HU; 3GPP DRAFT; R2-160438.

HUAWEI ET AL, "Discussion on Msg3 Size", vol. RAN WG2, no. St. Julian's, Malta; 3GPP DRAFT; R2-161378.

ERICSSON, "Security for RRC Connection Suspend and Resume procedure in solution 18 for Narrow Band CIoT", vol. SA WG3, no. Dubrovnik, Croatia; 3GPP DRAFT; S3-160157.

QUALCOMM INCORPORATED, "Impact of DoNAS on SlAP UE-Associated Procedures", vol. RAN WG3, no. Budapest, HU; 3GPP DRAFT; R3-160078.

"3rd Generation Partnership Project; Technical Specification Group Services and System Aspects; Study on architecture enhancements for Cellular Internet of Things (Release 13)", 3GPP STANDARD ; TECHNICAL REPORT; 3GPP TR 23.720.

The present invention is defined by the features of the independent claim(s). Preferred advantageous embodiments thereof are defined by the sub-features of the dependent claims.

Any reference to "embodiment(s)", "example(s)" or "aspect(s) of the invention" in this description not falling under the scope of the claims should be interpreted as illustrative example(s) for understanding the invention.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 is a functional diagram of a wireless network in accordance with some embodiments.
FIG. 2 illustrates components of a communication network in accordance with some embodiments.
FIG. 3 illustrates aspects of resume failure fallback operations in accordance with some embodiments.
FIG. 4 illustrates an example method for resume failure fallback in accordance with the invention.
FIG. 5 illustrates one example method of resume failure fallback in accordance with the invention.
FIG. 6 illustrates aspects of a UE, in accordance with some example embodiments.
FIG. 7 is a block diagram illustrating an example computer system, machine which may be used in association with various embodiments described herein,
FIG. 8 illustrates aspects of a UE, in accordance with some example embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

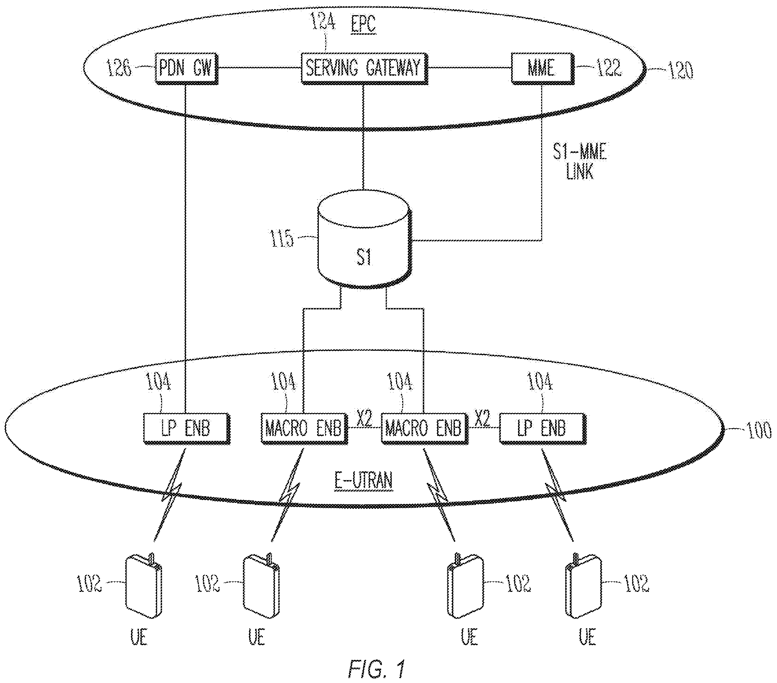

FIG. 1 shows an example of a portion of an end-to-end network architecture of a network (e.g., a Long Term Evolution (LTE) network) with various components of the network in accordance with some embodiments. Such a network architecture may be used to implement resume failure fallback operations, particularly for cellular Internet of Things (CIoT) devices and communications, as described further below. Some communications between eNB 104 and UE 102 operations may be used in an LTE network which supports specialized CIoT functionality, such as the networks of FIGs. 1-2, or in any other such communication network. As used herein, "LTE network" refers to both LTE and LTE Advanced (LTE-A) networks as well as other versions of LTE networks in development, such as 4G and 5G LTE networks. The network may comprise a radio access network (RAN) (e.g., as depicted, the E-UTRAN or evolved universal terrestrial radio access network) 100 and a core network 120 (e.g., shown as an evolved packet core (EPC)) coupled together through an S1 interface 115. For convenience and brevity, only a portion of the core network 120, as well as the RAN 100, is shown in the example.

The core network 120 may include a mobility management entity (MME) 122, a serving gateway (S-GW) 124, and a packet data network gateway (PDN GW) 126. The RAN 100 may include evolved nodeBs (eNBs) 104 (which may operate as base stations) for communicating with user equipment (UE) 102. The eNBs 104 may include macro eNBs 104a and low power (LP) eNBs 104b. The eNBs 104 and UEs 102 may employ the techniques described herein.

The MME 122 may be similar in function to the control plane of legacy Serving GPRS Support Nodes (SGSN). The MME 122 may manage mobility aspects in access such as gateway selection and tracking area list management. As part of such operation, the MME 122 assists with providing context information describing a particular UE from S-GW 124 to an eNB 104 to enable the particular UE 102 to connect to the eNB 104. Such context information may be used by eNBs 104 to assist with determining functionality and various operations in establishing a connection (e.g., RRC connections) between the eNB 104 and a particular UE 102.

The S-GW 124 may terminate the interface toward the RAN 100, and route data packets between the RAN 100 and the core network 120. In addition, the S-GW 124 may be a local mobility anchor point for inter-eNB handovers and also may provide an anchor for inter-3GPP mobility. Other responsibilities may include lawful intercept, charging, and some policy enforcement. As part of this functionality, at least a portion of the context information described above may be stored at the S-GW 124, and adjusted or communicated in communication with MME 122. In various embodiments, the S-GW 124 and the MME 122 may be implemented in one physical node or separate physical nodes.

The PDN GW 126 may terminate a SGi interface toward the packet data network (PDN). The PDN GW 126 may route data packets between the core network 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the S-GW 124 may be implemented in a single physical node or separate physical nodes.

The eNBs 104 (macro and micro) may terminate the air interface protocol and may be the first point of contact for a UE 102. In some embodiments, an eNB 104 may fulfill various logical functions for the RAN 100 including, but not limited to, RNC (radio network controller) functions such as radio bearer management, uplink and downlink dynamic radio resource management and data packet scheduling, and mobility management. In accordance with embodiments, the UEs 102 may be configured to communicate orthogonal frequency division multiplexed (OFDM) communication signals with an eNB 104 over a multicarrier communication channel in accordance with an orthogonal frequency-division multiple access (OFDMA) communication technique. The OFDM signals may comprise a plurality of orthogonal subcarriers. CloT implementations enable large numbers of eNBs 104 to connect to supported CloT UEs using low data rate narrowband communications. Such systems may be referred to as narrowband CloT (NB-CIoT). In some embodiments, such CloT UEs communicate with eNBs using a 180 kilohertz bandwidth, which corresponds to the bandwidth used by a single physical resource block in an LTE system. Such a system may enable many narrowband channels within a licensed spectrum, such that large numbers of devices may each use a single narrowband channel to communicate low data rate communications. In some systems, these communications may be implemented in guard bands of other communication systems.

The S1 interface 115 may be the interface that separates the RAN 100 and the core network 120. It may be split into two parts: the S1-U, which may carry traffic data between the eNBs 104 and the S-GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP eNBs 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term "LP eNB" refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB since it is coupled through the PDN GW 126. Similarly, a picocell may be a wireless communication system typically covering a small area, such as inbuilding (offices, shopping malls, train stations, etc.), or more recently, inaircraft. A picocell eNB may generally connect through the X2 link to another eNB such as a macro eNB through its base station controller (BSC) functionality. Thus, a LP eNB 104b may be implemented with a picocell eNB since it may be coupled to a macro eNB 104a via an X2 interface. Picocell eNBs or other LP eNBs 104b may incorporate some or all functionality of a macro eNB 104a or LP eNB 104a. In some cases, this may be referred to as an access point base station or enterprise femtocell.

Communication over an LTE network may be split up into 10ms radio frames, each of which may contain ten 1ms subframes. Each subframe of the frame, in turn, may contain two slots of 0.5ms. Each subframe may be used for uplink (UL) communications from the UE 102 to the eNB 104 or downlink (DL) communications from the eNB 104 to the UE 102. In one embodiment, the eNB 104 may allocate a greater number of DL communications than UL communications in a particular frame. The eNB 104 may schedule transmissions over a variety of frequency bands. Each slot of the subframe may contain 6-7 OFDM symbols, depending on the system used. In one embodiment, each subframe may contain 12 subcarriers. In the 5G system, however, the frame size (ms), the subframe size, and the number of subframes within a frame, as well as the frame structure, may be different from those of a 4G or LTE system. The subframe size, as well as the number of subframes in a frame, may also vary in the 5G system from frame to frame. For example, while the frame size may remain at 10ms in the 5G system for downward compatibility, the subframe size may be decreased to 0.2ms or 0.25 ms to increase the number of subframes in each frame.

A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A RB in some embodiments may be 180 kHz wide in frequency and 1 slot long in time. In frequency, RBs may be either 12 x 15 kHz subcarriers or 24 x 7.5 kHz subcarriers wide, dependent on the system bandwidth. In Frequency Division Duplexing (FDD) systems, both the uplink and downlink frames may be 10ms and frequency (full-duplex) or time (half-duplex) separated. The duration of the resource grid in the time domain corresponds to one subframe or two resource blocks. Each resource grid may comprise 12 (subcarriers) * 14 (symbols) =168 resource elements. As described above, CIoT channels may assign single physical resource blocks to a channel that is directed to an individual device, whereas other systems may provide much larger amounts of bandwidth to an individual device.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different 5G physical downlink channels that are conveyed using such resource blocks, including the 5G physical downlink control channel (xPDCCH) and the 5G physical downlink shared channel (xPDSCH). Each downlink subframe may be partitioned into the xPDCCH and the xPDSCH, and perhaps additional signals, as discussed below. The xPDCCH may occupy the first two symbols of each subframe and carry, among other information, information about the transport format and resource allocations related to the xPDSCH channel, as well as allocation and hybrid automatic repeat request (H-ARQ) information related to the 5G uplink shared channel (xPUSCH). The xPDSCH may carry user data and higher-layer signaling to a UE and, in some embodiments, occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the xPDCCH used for (assigned to) the UE. The xPDCCH may contain DCI in one of a number of formats that indicate to the UE how to find and decode data, transmitted on the xPDSCH in the same subframe, from the resource grid. The DCI format may provide details such as a number of resource blocks, resource allocation type, modulation scheme, transport block, redundancy version, coding rate, etc. Each DCI format may have a cyclic redundancy code (CRC) and be scrambled with a Radio Network Temporary Identifier (RNTI) that identifies the target UE for which the xPDSCH is intended. Use of the UE-specific RNTI may limit decoding of the DCI format (and hence the corresponding xPDSCH) to only the intended UE.

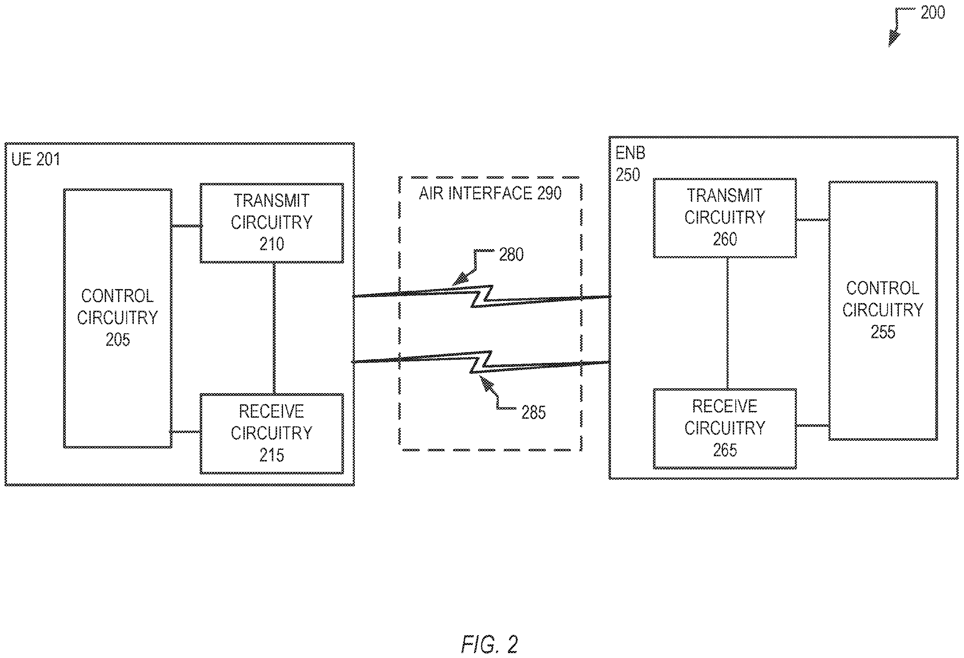

FIG. 2 illustrates a wireless network 200, in accordance with some embodiments. The wireless network 200 includes a UE 201 and an eNB 250 connected via one or more channels 280, 285 across an air interface 290. The UE 201 and eNB 250 communicate using a system that supports controls for managing the access of the UE 201 to a network via the eNB 250.

In the wireless network 200, the UE 201 and any other UE in the system may be, for example, laptop computers, smartphones, tablet computers, printers, machine-type devices such as smart meters or specialized devices for healthcare monitoring, remote security surveillance systems, intelligent transportation systems, or any other wireless devices with or without a user interface. The eNB 250 provides the UE 201 network connectivity to a broader network (not shown). This UE 201 connectivity is provided via the air interface 290 in an eNB service area provided by the eNB 250. In some embodiments, such a broader network may be a wide area network operated by a cellular network provider, or may be the Internet. Each eNB service area associated with the eNB 250 is supported by antennas integrated with the eNB 250. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector. One embodiment of the eNB 250, for example, includes three sectors each covering an approximately 120 degree area with an array of antennas directed to each sector to provide 360 degree coverage around the eNB 250.

The UE 201 includes control circuitry 205 coupled with transmit circuitry 210 and receive circuitry 215. The transmit circuitry 210 and receive circuitry 215 may each be coupled with one or more antennas. The control circuitry 205 may be adapted to perform operations associated with wireless communications using congestion control. The control circuitry 205 may include various combinations of application specific circuitry and baseband circuitry. The transmit circuitry 210 and receive circuitry 215 may be adapted to transmit and receive data, respectively, and may include radio frequency (RF) circuitry or front end module (FEM) circuitry. In various embodiments, aspects of the transmit circuitry 210, receive circuitry 215, and control circuitry 205 may be integrated in various ways to implement the circuitry described herein. The control circuitry 205 may be adapted or configured to perform various operations such as those described elsewhere in this disclosure related to a UE. The transmit circuitry 210 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 210 may be configured to receive block data from the control circuitry 205 for transmission across the air interface 290. Similarly, the receive circuitry 215 may receive a plurality of multiplexed downlink physical channels from the air interface 290 and relay the physical channels to the control circuitry 205. The plurality of downlink physical channels may be multiplexed according to TDM or FDM along with carrier aggregation. The transmit circuitry 210 and the receive circuitry 215 may transmit and receive both control data and content data (e.g., messages, images, video, etc.) structured within data blocks that are carried by the physical channels. For a machine configured for low bandwidth or irregular communications (e.g., utility meters, stationary sensors, etc.) customized circuitry and antennas may be used to enable communications on a narrow bandwidth (e.g., 180 kHz, or other similar narrow bandwidths) to enable the device to consume small amounts of network resources.

FIG. 2 also illustrates the eNB 250, in accordance with various embodiments. The eNB 250 circuitry may include control circuitry 255 coupled with transmit circuitry 260 and receive circuitry 265. The transmit circuitry 260 and receive circuitry 265 may each be coupled with one or more antennas that may be used to enable communications via the air interface 290.

The control circuitry 255 may be adapted to perform operations for managing channels and congestion control communications used with various UEs, including communication of open mobile alliance (OMA) management objects (OMA-MOs) describing application categories as detailed further below. The transmit circuitry 260 and receive circuitry 265 may be adapted to transmit and receive data, respectively, to any UE connected to the eNB 250. The transmit circuitry 260 may transmit downlink physical channels comprised of a plurality of downlink subframes. The receive circuitry 265 may receive a plurality of uplink physical channels from various UEs including the UE 201. For compatibility with CIoT, UEs, an eNB may be similarly configured with specialized hardware, software, and/or firmware to manage narrowband communications.

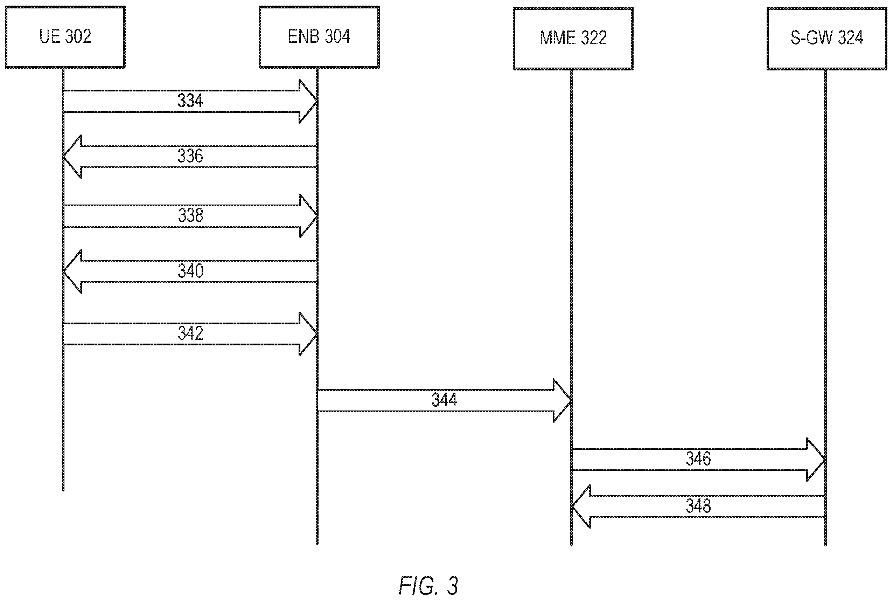

FIG. 3 illustrates aspects of resume failure fallback operations accordance with some embodiments. FIG. 3 includes UE 302, eNB 304, MME 322, and S-GW 324, which may be similar to the corresponding elements described above in FIGs. 1-2. In such systems, the Radio Resource Control (RRC) protocol layer of LTE is implemented in both UEs and eNBs, and is part of the LTE air interface control plane. RRC connection establishment configures Signal Radio Bearer 1 (SRB1) for a UE and allows the UE to set a structure for connection (e.g., attachment, service requests, tracking area updates, etc.) In LTE, a UE can be in either RRC connected or RRC idle mode (e.g idle state). In RRC connected mode, the UE and eNB has a UE context that stores the current RAN configuration for the UE that is used for communication between the UE and the network. When the UE has no data to send, it can be moved to the RRC idle mode where the UE context in RAN is released. In this state, the UE cannot communicate with the network.

Additionally, the radio protocol architecture for LTE can be separated into control plane and user plane architectures. On the user plane side, an application creates data packets for protocols such as Internet protocol (IP) and transmission control protocol (TCP). In the control plane, RRC protocols write signaling messages that are exchanged between the UE and the eNB. Further, the access stratum (AS) is a functional layer in the universal mobile telecommunication system (UMTS) and LTE wireless protocol stacks between radio network and user equipment stacks. The AS is responsible for transporting data over the wireless connection and managing radio resources. Some embodiments of NB-IoT AS context caching operate to manage storage of context information to enable RRC connections between UEs and eNBs. Some embodiments may operate using legacy LTE connection establishment operations, user plane (UP) connection establishment procedures, or control plane (CP) connection establishment procedures for an RRC connection within the context of LTE operations. Embodiments herein enable a transition from a UP solution to a CP solution or legacy connection establishment when a resume procedure fails due to context unavailability or any other such reason. In some embodiments, this transition may occur as part of a selection by the UE between an option for a particular solution, followed by a transition when the selected RRC connection establishment type is fallbacked. In other embodiments, the user does not select between the different RRC connection establishment types, but automatically performs a particular RRC connection establishment type, and then transitions when the RRC connection establishment is fallbacked (e.g., due to context information being stale or unavailable to the eNB when an RRC connection resume is attempted). As described below, in various embodiments this transition operates by forwarding a System Architecture Evolution (SAE) Temporary Mobile Subscriber Identity (S-TMSI) from the UE to the eNB in an RRC connection establishment message. This enables the UE to have an optimized fallback to the legacy RRC connection setup upon resume failure while attempting to use a UP RRC connection solution for certain implementations of LTE operation. Such solutions may be used particularly for CIoT operations to limit resource usage.

FIG. 3 illustrates an embodiment in which an S-TMSI (e.g., 40 bit identifier) is incorporated into a legacy RRC connection setup complete message according to the invention. This enables the eNB 304 to send the S-TMSI to MME 322 through from UE 302 to support resume failure fallback operation and enable RRC connection establishment.

In various embodiments, prior to the operations shown in FIG. 3, UE 302 is already attached (i.e., registered) and the network has configured the UE 302 to use the UP solution. This configuration may be performed automatically, or in response to a UE 302 selection between the CP solution, the UP solution, and the legacy solution for RRC establishment signaling. In the CIoT UP solution, the UE 302 performs an initial connection setup to establish the non-access stratum (NAS) signaling connection and provide the UE 302 and network with an initial AS context (e.g., context information). When the UE 302 transitions from RRC-Connected to RRC-IDLE mode, the connection is suspended. As part of the suspension, the UE 302 and the network (e.g., eNB 304) retain the UE's context information in RRC-IDLE mode to be used for future connections. The UE 302 is now in IDLE mode, but in suspended state. In the connection resumption procedure, a resume connection request is sent to the eNB 304 referring to the stored context of UE 302. A resume identity information element (IE) may be used for such a reference to the stored context of UE 302. In various embodiments, the operations described herein particularly discuss fallback from a UP process in LTE and NB-IoT operation, but they can be equally applied to other radio access technology (RAT), which operate using similar context information, as needed.

As UE 302 prepares to move from RRC IDLE to connected, the physical random access channel (PRACH) is used in operation 334 to initiate RRC connection reestablishment using a random access (RA) message. The eNB 304 then responds in operation 336 with a random access response (RAR). UE 302 then sends an RRC connection resume request, including a resume identity IE, to eNB 304 in operation 338. This may include a short media access control establishment clause, and be sent over signal radio bearer 0.

In the invention, once the RRC connection request is received to resume a previously suspended connection, eNB 304 re-utilizes the RRC connection setup message in response, and the information from this request may be stored as part of the context information associated with an identifier for the UE 302.

The eNB 304 then responds in operation 340 with an RRC connection setup, with a resume failure indication, signal radio bearer 1 setup, and other configuration information set using signal radio bearer 0. This communication in operation 340 indicates to the UE 302 that eNB 304 did not have access to the context information associated with the resume identity IE in the RRC connection resume request of operation 338 (e.g., RRC connection resume was fallbacked). This may be because the association or locally stored information at eNB 304 was stale (e.g., out of date or exceeded an expiration threshold) or was deleted or otherwise unavailable in the memory of eNB 304.

In various embodiments, there are different cases when the eNB 304 may not be able to either fetch the context or support the resume procedure, or the UE 302 context might be too old to be considered valid. The eNB 304 may either reject the connection or redirect to perform the service request procedure. Redirecting the UE 302 in accordance with embodiments described herein reduces signaling overhead. Additionally, this solution has no concern related to skipping access control as it would have been applied during the original connection resume request. However, when the UE 302 performs RRC Connection Resume Request, it provides the network assigned resume identity IE (which, for example, could have 40 bits) rather than the legacy-defined S-TMSI. So, when the resume fails, the eNB 304 does not have an identifier that the MME 332 can recognize to fetch the context from the MME 322.

Operation 342 then involves an RRC connection setup complete message sent from UE 302 to eNB 304. In response to the indication in the message of operation 340 indicating that the RRC connection resume was fallbacked, the RRC connection setup complete of operation 342 includes the S-TMSI for the UE 302 in a communication sent over signal radio bearer 1 (SRB1) as configured as part of operation 340, which enables the eNB 304 and UE 302 to place UE 302 in the RRC connected mode and perform cellular network communications (e.g., NB-IoT or CIoT operations). In the invention, the eNB 304 relays the S-TMSI to MME 332 in operation 344. MME 322 then further communicates a modify bearer request to S-GW 324 in operation 346, and receives a modify bearer response in operation 348. Any necessary information may then be further relayed to eNB 304 in subsequent operations to finalize configuration for UE 302 to resume the RRC connected mode and receive network access.

Therefore, the invention relates to an update by which the eNB obtains the UE's S-TMSI to obtain the context from the MME and proceed with the legacy connection establishment procedure upon or even after the RRC connection setup response, the latter being not part of the invention. Embodiments not being part of the invention, may also clarify that the UE may have the option to choose between a legacy connection establishment procedure or a CP solution when resume fails (e.g., when the RRC connection resume is fallbacked). In some embodiments not being part of the invention, this may occur even when the network advertised its support of a UP solution. In other embodiments, other mechanisms may be used to enable a response to the fallback operations.

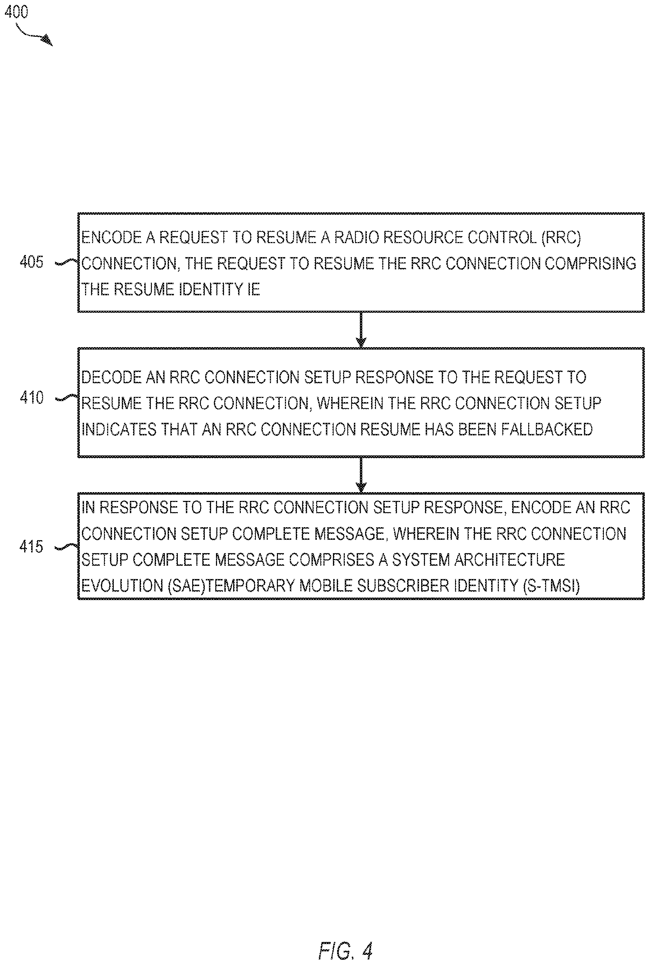

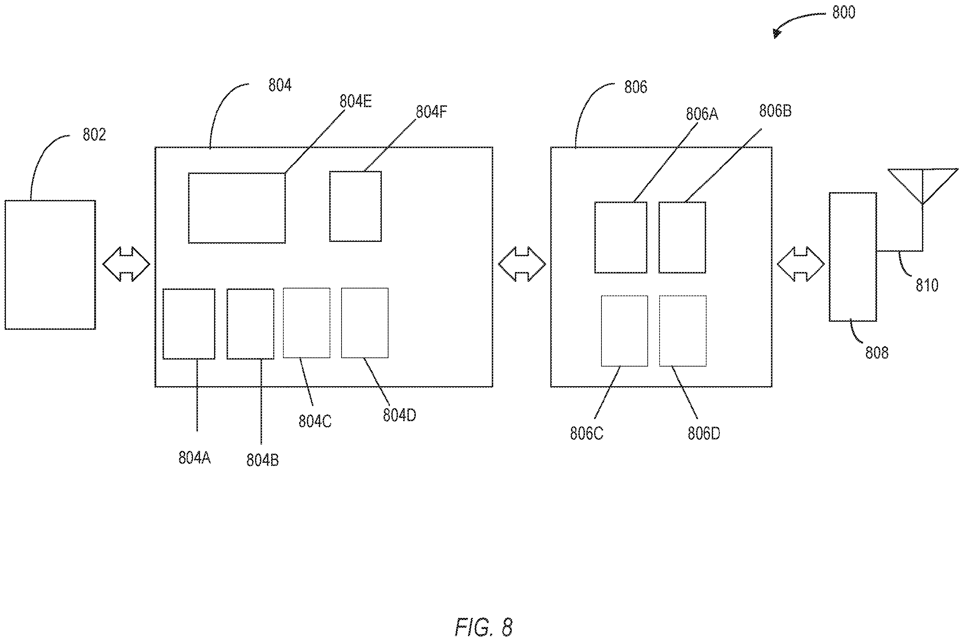

FIG. 4 illustrates an example method for resume failure fallback in accordance with the invention. Method 400 may be performed by an apparatus of a UE such as the baseband circuitry 804 of FIG. 8. In other embodiments, other control circuitry is configured to implement the operations of method 400. In still further embodiments, other aspects of an integrated UE, including any UE described herein, may perform method 400. Further, in some embodiments, method 400 may be embodied in storage memory or non- transitory computer-readable media as instructions that, when executed by one or more processors of an IoT UE, perform the operations of method 400. Method 400 may particularly be implemented by CIoT devices to provide reduced signaling for NB-IoT operations.

Method 400 begins with operation 405, which involves an operation to encode a request to resume a radio resource control (RRC) connection. As described above, the request to resume the RRC connection includes a resume identity information element (IE). This resume identity IE is associated with context information within the network (e.g., at the eNB), which, if available, enables the RRC connection to be resumed.

The UE then decodes an RRC connection setup response to the request to resume the RRC connection in operation 410. The RRC connection setup indicates that an RRC connection resume has been fallbacked. As described above, this is in response to the context information stored as part of the UP solution being unavailable.

Then, in response to the RRC connection setup response, the UE encodes an RRC connection setup complete message in operation 415, wherein the RRC connection setup complete message comprises an S-TMS1. The S- TMSI may then be used by the eNB to finalize the configuration and enable the RRC connection state at the UE.

In various embodiments, additional operations may be performed in conjunction with the operations of method 400. Certain embodiments may include intervening operations or repeated operations. In some embodiments, as described above, initial random access communications initiate the RRC connection resume operations of method 400. Further operations include prior operations to transition to an RRC idle mode in response to suspension of the RRC connection prior to encoding the request to resume the RRC connection.

In some embodiments, the resume identity IE is stored in the memory of the UE as a stored resume ID in response to suspension of the RRC connection. In some embodiments, the resume identity (ID) IE comprises a truncated resume ID, For example, the resume ID IE may be selected digits from a 40 digit S-TMSI or a truncated number of digits from another identifier for the UE. In certain embodiments, the stored resume ID is discarded in response to decoding of the RRC connection setup. A subsequent ID may be generated upon a RRC idle transition.

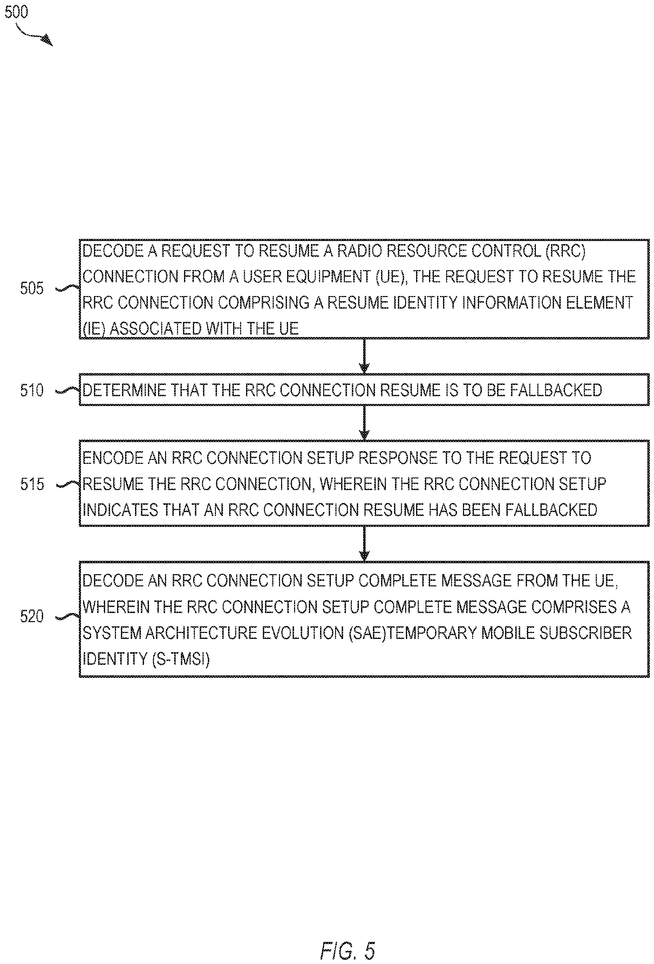

FIG. 5 illustrates one example method of resume failure fallback in accordance with the invention. Method 500 corresponds to the UE operations of method 400 and describes the related operations performed at an eNB with which the UE is attempting to reestablish the RRC connection. In some embodiments, method 500 is performed by an apparatus of an eNB, similar to the baseband circuitry 804 of FIG. 8. In other embodiments, other control circuitry is configured to implement the operations of method 500. In still further embodiments, other aspects of an eNB, including any eNB or circuitry for a device operating as an eNB described herein, may perform method 500. Further, in some embodiments, method 500 may be embodied in storage memory or non-transitory computer-readable media as instructions that, when executed by one or more processors of an eNB configured to support NB-IoT operations, perform the operations of method 500. Method 500 may particularly be implemented by CIoT systems to provide reduced signaling for NB-IoT operations.

Method 500 begins with operation 505, where the eNB decodes a request to resume a radio resource control (RRC) connection from a user equipment (UE), the request to resume the RRC connection comprising a resume identity information element (IE) associated with the UE. Operation 510 then involves a determination or processing operation that identifies that the RRC connection resume is to be fallbacked. In various embodiments, this is an operation to attempt to access UP context information, with an encoded response IE generated in the following operation when the UP context information is unavailable or unacceptable (e.g., due to age).

The eNB then encodes an RRC connection setup response to the request to resume the RRC connection in operation 515, wherein the RRC connection setup indicates that an RRC connection resume has been fallbacked (e.g., due to unavailable UP context information associated with the resume identity IE). The eNB then decodes an RRC connection setup complete message from the UE in operation 520, wherein the RRC connection setup complete message comprises an S-TMSI. Just as described above for method 400, additional embodiments may involve various other operations, repeated operations, and intervening operations in accordance with the embodiments described herein.

An example embodiment of an RRC connection setup complete message and an S-TMSI (e.g., an S-TMSI IE) are provided below. These are example embodiments, and additional embodiments of RRC connection setup formats and S-TMSI IE formats are possible within the considered scope of the embodiments described herein. The RRC connection setup complete message may be structured as:

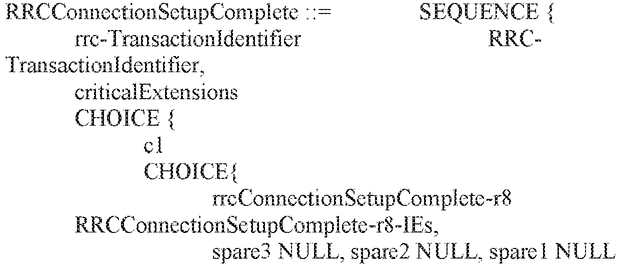

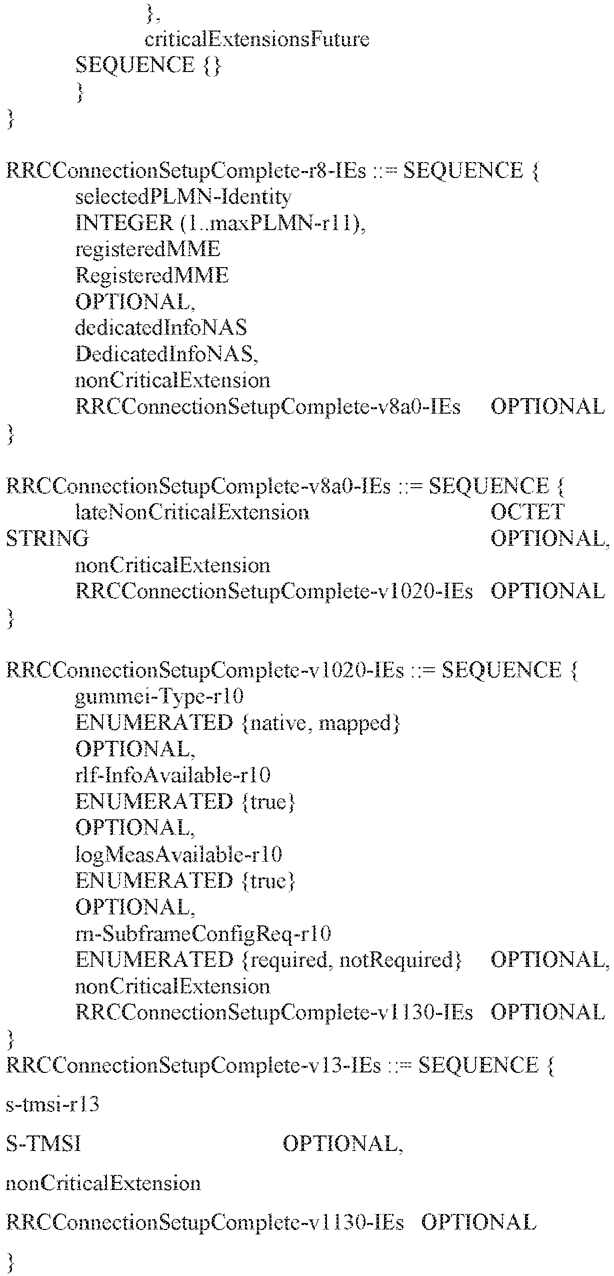

One embodiment of an S-TMSI IE used within the RRC connection setup complete may then be structured as:

```
         S-TMSI ::=
               SEQUENCE {
               mmec
               MMEC,
               m-TMSI
         }BIT STRING (SIZE (32))
```

It will be apparent that other structures may be used as well in various embodiments.

In some embodiments, an RRC connection setup complete message may be updated with a field defined to indicate the purpose of the establishment of the connection. This may be defined within the RRC connection resume request establishment cause. In some embodiments, this is a new kind of indication that is a sub-set of the legacy indications, or a completely new indication IE which signals that a previous resume procedure failed or that this UE is requesting a recovery of its previous suspended context that is not valid.

In another embodiment, a UE that gets the resume failure indication (e.g., the indication that the resume has been fallbacked) in the RRC connection setup message is set to RRC idle (e.g., through reject messaging) in order to apply for the corresponding access control mechanism. Alternatively, a new, or a variant of a, legacy access control mechanism is defined in some embodiments for a UE to delay its request to the network. For example, a specific AC (Access Class) indication is defined in some embodiments for UEs which failed on the resume of the connection. In some embodiments this is defined similarly to the access class barring (ACB) (e.g., barring time, factor, etc.) or as an AC flag, an AC bitmap, or a wait timer.

In another embodiment, the UE indicates that CP transmissions can be handled in cases when UP might not be handled (e.g., due to congestion in UP systems or congestion in storage of the UE contexts in the network/eNB side).

In another embodiment, the suspended UE performs periodic tracking area updates while in RRC idle mode with context stored and suspended. This may be done using the messaging described above. However, when the U E crosses the tracking area boundary or moves outside of the current tracking area identifier (TAI) list, it performs the connection establishment based Tracking Area Update (TAU). In various embodiments, the UE performs normal connection establishment when sending or receiving data outside the TAI list. This limits the scope the Resume ID, which is only 40 bits and hence not globally unique, but is assumed to be unique within the TAI list.

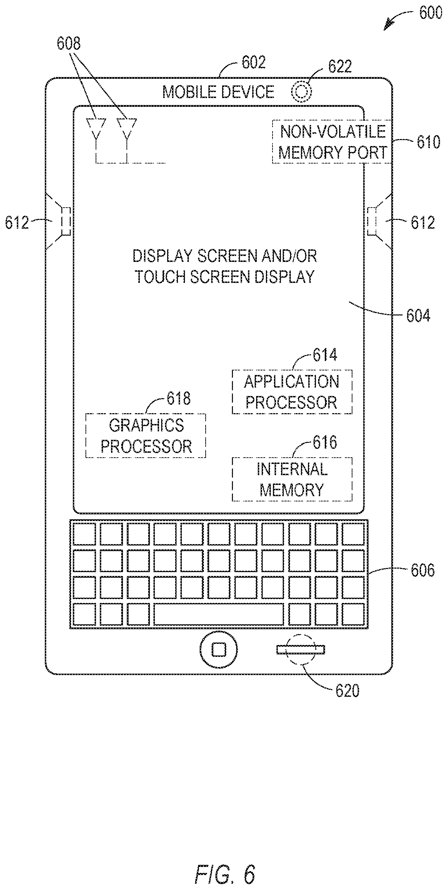

FIG. 6 shows an example UE, illustrated as a UE 600. The UE 600 may be an implementation of the UE 102, or any device described herein. The UE 600 can include one or more antennas 608 configured to communicate with a transmission station, such as a base station (BS), an eNB, or another type of wireless wide area network (WW AN) access point. The UE 600 can be configured to communicate using at least one wireless communication standard including 3 GPP LTE, WiMAX, High Speed Packet Access (HSPA), Bluetooth, and WiFi. The UE 600 can communicate using separate antennas for each wireless communication standard or shared antennas for multiple wireless communication standards. The UE 600 can communicate i a WLAN, a wireless personal area network (WPAN), and or a WW AN.

FIG. 6 also shows a microphone 620 and one or more speakers 612 that can be used for audio input and output to and from, the UE 600. A d splay screen 604 can be a liquid crystal display (LCD) screen, or another type of display screen such as an organic light emitting diode (OLED) display. The display screen 604 can be configured as a touch screen. The touch screen can use capacitive, resistive, or another type of touch screen technology. An application processor 614 and a graphics processor 618 can be coupled to an internal memory 616 to provide processing and display capabilities. A nonvolatile memory port 610 can also be used to provide data I/O options to a user. The non-volatile memory port 610 can also be used to expand the memory capabilities of the UE 600. A keyboard 606 can be integrated with the UE 600 or wirelessly connected to the UE 600 to provide additional user input. A virtual keyboard can also be provided using the touch screen. A camera 622 located on the front (display screen) side or the rear side of the UE 600 can also be integrated into a housing 602 of the UE 600.

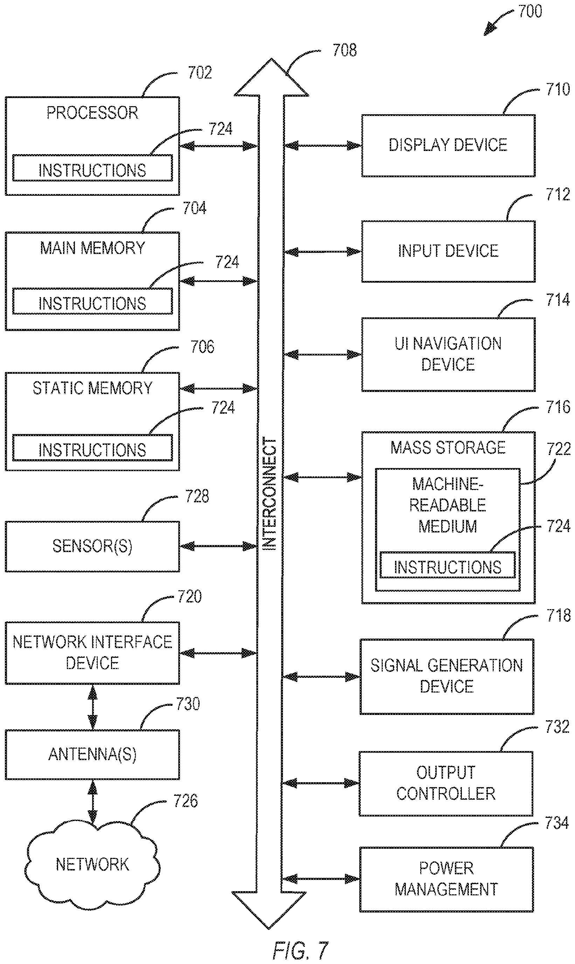

FIG. 7 is a block diagram illustrating an example computer system machine 700 upon which any one or more of the methodologies herein discussed can be run, and which may be used to implement the eNB 104, the UE 102, or any other device described herein. In various alternative embodiments, the machine 700 operates as a standalone device or can be connected (e.g., networked) to other machines. In a networked deployment, the machine 700 can operate in the capacity of either a server or a client machine in server-client network environments, or it can act as a peer machine in peer-to-peer (or distributed) network environments. The machine 700 can be a personal computer (PC) that may or may not be portable (e.g., a notebook or a netbook), a tablet, a set-top box (STB), a gaming console, a Personal Digital Assistant (PDA), a mobile telephone or smartphone, a web appliance, a network router, a network switch, a network bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system machine 700 includes a processor 702 (e.g., a central processing unit (CPU), a graphics processing unit (GPU), or both), a main memory 704, and a static memory 706, which communicate with each other via an interconnect 708 (e.g., a link, a bus, etc.). The computer system machine 700 can further include a video display device 710, an alphanumeric input device 72 (e.g., a keyboard), and a user interface (UI) navigation device 714 (e.g., a mouse). In one embodiment, the video display- device 710, alphanumeric input device 712, and UI navigation device 714 are a touch screen display. The computer system machine 700 can additionally include a mass storage device 716 (e.g., a drive unit), a signal generation device 718 (e.g., a speaker), an output controller 732, a power management controller 734, a network interface device 720 (which can include or operably communicate with one or more antennas 730, transceivers, or other wireless communications hardware), and one or more sensors 728, such as a GPS sensor, compass, location sensor, accelerometer, or other sensor.

The mass storage device 716 includes a machine-readable medium 722 on which is stored one or more sets of data structures and instructions 724 (e.g., software) embodying or utilized by any one or more of the methodologies or functions described herein. The instructions 724 can also reside, completely or at least partially, within the main memor' 704, static memor - 706, and/or processor 702 during execution thereof by the computer system machine 700, with the mam memory 704, the static memory 706, and the processor 702 also constituting machine-readable media.

While the machine-readable medium 722 is illustrated in an example embodiment to be a single medium, the term "machine-readable medium" can include a single medium or multiple media (e.g., a centralized or distributed database, and/or associated caches and servers) that store the one or more instructions 724. The term "machine-readable medium" shall also be taken to include any tangible medium that is capable of storing, encoding, or carrying instructions for execution by the machine and that cause the machine to perform any one or more of the methodologies of the present disclosure, or that is capable of storing, encoding, or carrying data structures utilized by or associated with such instructions.

The instructions 724 can further be transmitted or received over a communications network 726 using a transmission medium via the network interface device 720 utilizing any one of a number of well-known transfer protocols (e.g., hypertext transfer protocol (HTTP)). The term "transmission medium" shall be taken to include any medium that is capable of storing, encoding, or carrying instructions for execution by the machine, and includes digital or analog communications signals or other intangible media to facilitate communication of such software.

Various techniques, or certain aspects or portions thereof, may take the form of program code (i.e., instructions) embodied in tangible media, such as floppy diskettes, CD-ROMs, hard drives, non-transitory computer-readable storage media, or any other machine -readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a Random Access Memory (RAM), Erasable Programmable Read-Only Memory- (EPROM), flash drive, optical drive, magnetic hard drive, or other medium for storing electronic data. The eNB and UE may also include a transceiver module, a counter module, a processing module, and/or a clock module or timer module. One or more programs that may implement or utilize the various techniques described herein may use an application programming interface (API), reusable controls, and the like. Such programs may be implemented in a high-level procedural or object-oriented programming language to communicate with a computer system. However, the program(s) may be implemented in assembly or machine language, if desired. In any case, the language may be a compiled or interpreted language, and combined with hardware implementations.

Various embodiments may use 3GPP LTE/LTE-A, Institute of Electrical and Electronic Engineers (IEEE) 702.11, and Bluetooth communication standards. Various alternative embodiments may use a variety of other WW AN, WLAN, and WPAN protocols and standards in connection with the techniques described herein. These standards include, but are not limited to, other standards from 3 GPP (e.g., HSPA-UMTS), IEEE 702.16 (e.g., 702.16p), or Bluetooth (e.g., Bluetooth 6.0, or like standards defined by the Bluetooth Special Interest Group) standards families. Other applicable network configurations can be included within the scope of the presently described communication networks. It will be understood that communications on such communication networks can be facilitated using any number of personal area networks (PANs), local area networks (LANs), and wide area networks (WANs), using any combination of wired or wireless transmission mediums.

Embodiments described herein may be implemented into a system, using any suitably configured hardware and/or software. FIG. 8 illustrates components of a UE 800 in accordance with some embodiments. At least some of the components shown may be used in the UE 102 (or eNB 104) shown in FIG. 1. The UE 800 and other components may be configured to use the synchronization signals as described herein. The UE 800 may be one of the UEs 102 shown in FIG. 1 and may be a stationary, non-mobile device or may be a mobile device. In some embodiments, the UE 800 may include application circuitry 802, baseband circuitry 804, Radio Frequency (RF) circuitry 806, front- end module (FEM) circuitry 808, and one or more antennas 810, coupled together at least as shown. At least some of the baseband circuitry 804, RF circuitry 806, and FEM circuitry 808 may form a transceiver. In some embodiments, other network elements, such as the eNB 104, may contain some or all of the components shown in FIG. 8. Other of the network elements, such as the MME 122, may contain an interface, such as the S I interface, to communicate with the eNB over a wired connection regarding the UE 800.

The application circuitry 802 may include one or more application processors. For example, the application circuitry 802 may include circuitry such as, but not limited to, one or more single -core or multi-core processors. The processors) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the UE 800.

The baseband circuitry 804 may include circuitry such as, but not limited to, one or more single-core or multi-core processors. The baseband circuitry 804 may include one or more baseband processors and/or control logic to process baseband signals received from a receive signal path of the RF circuitry 806 and to generate baseband signals for a transmit signal path of the RF circuitry 806. The baseband circuitry 804 may interface with the application circuitry 802 for generation and processing of the baseband signals and for controlling operations of the RF circuitry 806. For example, in some embodiments, the baseband circuitry 804 may include a second generation (2G) baseband processor 804a, third generation (3G) baseband processor 804b, fourth generation (4G) baseband processor 804c, and/or other baseband processor(s) 804d for other existing generations, generations in development, or generations to be developed in the future (e.g., fifth generation (5G), etc.). The baseband circuitry 804 (e.g., one or more of the baseband processors 804a-d) may handle various radio control functions that enable communication with one or more radio networks via the RF circuitry 806. The radio control functions may include, but are not limited to, signal modulation/demodulation, encoding/decoding, radio frequency shifting, etc. In some embodiments, modulation/demodulation circuitry of the baseband circuitry 804 may include FFT, preceding, and/or constellation mapping/demapping functionality. In some embodiments, encoding/decoding circuitry of the baseband circuitry 804 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 804 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 804e of the baseband circuitry 804 may be configured to run elements of the protocol stack for signaling of the PHY, MAC, RLC, PDCP, and/or RRC layers. In some embodiments, the baseband circuitry 804 may include one or more audio digital signal processors) (DSPs) 804f. The audio DSP(s) 804f may be or include elements for compression/decompression and echo cancellation and may include other suitable processing elements in other embodiments. Components of the baseband circuitry 804 may be suitably combined in a single chip or a single chipset, or disposed on a same circuit board in some embodiments. In some embodiments, some or all of the constituent components of the baseband circuitry 804 and the application circuitry 802 may be implemented together, such as, for example, on a system on a chip (SOC).

In some embodiments, the baseband circuitry 804 may provide for communication compatible with one or more radio technologies. For example, in some embodiments, the baseband circuitry 804 may support communication with an EUTRAN and/or other wireless metropolitan area networks (WMAN), a WLAN, or a WPAN. Embodiments in which the baseband circuitry 804 is configured to support radio communications of more than one wireless protocol may be referred to as multimode baseband circuitry. In some embodiments, the UE 800 can be configured to operate in accordance with communication standards or other protocols or standards, including Institute of Electrical and Electronic Engineers (IEEE) 602.16 wireless technology (WiMax), IEEE 602.11 wireless technology (WiFi) including IEEE 602.11 ad, which operates in the 60 GHz millimeter wave spectrum, or various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc., technologies either already developed or to be developed.

The RF circuitry 806 may enable communication with wireless networks using modulated electromagnetic radiation through a non-solid medium. In various embodiments, the RF circuitry 806 may include switches, filters, amplifiers, etc., to facilitate the communication with the wireless network. The RF circuitry 806 may include a receive signal path which may include circuitry to down-convert RF signals received from the FEM circuitry 808 and provide baseband signals to the baseband circuitry 804. The RF circuitry 806 may also include a transmit signal path which may include circuitry to up-convert baseband signals provided by the baseband circuitry 804 and provide RF output signals to the FEM circuitry 808 for transmission.

In some embodiments, the RF circuitry 806 may include a receive signal path and a transmit signal path. The receive signal path of the RF circuitry 806 may include mixer circuitry 806a, amplifier circuitry 806b, and filter circuitry 806c. The transmit signal path of the RF circuitry 806 may include the filter circuitry 806c and the mixer circuitry 806a. The RF circuitry 806 may also include synthesizer circuitry 806d for synthesizing a frequency for use by the mixer circuitry 806a of the receive signal path and the transmit signal path. In some embodiments, the mixer circuitry 806a of the receive signal path may be configured to down-convert RF signals received from the FEM circuitry 808 based on the synthesized frequency provided by the synthesizer circuitry 806d. The amplifier circuitry 806b may be configured to amplify the down-converted signals, and the filter circuitry 806c may be a low-pass filter (LPF) or bandpass filter (BPF) configured to remove unwanted signals from the down-converted signals to generate output baseband signals. Output baseband signals may be provided to the baseband circuitry 804 for further processing. In some embodiments, the output baseband signals may be zero-frequency baseband signals, although this is not a requirement. In some embodiments, the mixer circuitry 806a of the receive signal path may comprise passive mixers, although the scope of the embodiments is not limited in this respect.

In some embodiments, the mixer circuitry 806a of the transmit signal path may be configured to up-convert input baseband signals based on the synthesized frequency provided by the synthesizer circuitry 806d to generate F output signals for the FEM circuitry 808. The baseband signals may be provided by the baseband circuitry 804 and may be filtered by the filter circuitry 806c. The filter circuitry 806c may include a low-pass filter (LPF), although the scope of the embodiments is not limited in this respect.

In some embodiments, the mixer circuitry 806a of the receive signal path and the mixer circuitry 806a of the transmit signal path may include two or more mixers and may be arranged for quadrature downconversion and/or upconversion respectively. In some embodiments, the mixer circuitry 806a of the receive signal path and the mixer circuitry 806a of the transmit signal path may include two or more mixers and may be arranged for image rejection (e.g., Hartley image rejection). In some embodiments, the mixer circuitry 806a of the receive signal path and the mixer circuitry 806a of the transmit signal path may be arranged for direct downconversion and/or direct upconversion, respectively. In some embodiments, the mixer circuitry 806a of the receive signal path and the mixer circuitry 806a of the transmit signal path may be configured for superheterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 806 may include analog-to-digital converter (ADC) and digital-to-analog converter (DAC) circuitry and the baseband circuitry 804 may include a digital baseband interface to communicate with the RF circuitry 806.

In some dual-mode embodiments, a separate radio IC circuitry may be provided for processing signals for each spectrum, although the scope of the embodiments is not limited in this respect.

In some embodiments, the synthesizer circuitry 806d may be a fractional -N synthesizer or a fractional N/N+1 synthesizer, although the scope of the embodiments is not limited in this respect, as other types of frequency synthesizers may be suitable. For example, the synthesizer circuitry 806d may be a delta-sigma synthesizer, a frequency multiplier, or a synthesizer comprising a phase-locked loop with a frequency divider,

The synthesizer circuitry 806d may be configured to synthesize an output frequency for use by the mixer circuitry 806a of the RF circuitry 806 based on a frequency input and a divider control input. In some embodiments, the synthesizer circuitry 806d may be a fractional N N+1 synthesizer.

In some embodiments, frequency input may be provided by a voltage controlled oscillator (VCO), although that is not a requirement. Divider control input may be provided by either the baseband circuitry 804 or the application circuitry 802 depending on the desired output frequency. In some embodiments, a divider control input (e.g., N) may be determined from a look-up table based on a channel indicated by the application circuitry 802.

The synthesizer circuitry 806d of the RF circuitry 806 may include a divider, a dela -locked loop (DLL), a multiplexer, and a phase accumulator. In some embodiments, the divider may be a dual modulus divider (DMD) and the phase accumulator may be a digital phase accumulator (DP A). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 806d may be configured to generate a carrier frequency as the output frequency, while in other embodiments, the output frequency may be a multiple of the carrier frequency (e.g., twice the earner frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 806 may include an IQ/polar converter.

The FEM circuitry 808 may include a receive signal path, which may include circuitry configured to operate on RF signals received from the one or more antennas 810, amplify the received signals, and provide the amplified versions of the received signals to the RF circuitry 806 for further processing. The FEM circuitry 808 may also include a transmit signal path, which may include circuitry configured to amplify signals for transmission provided by the RF circuitry 806 for transmission by one or more of the one or more antennas 810.

In some embodiments, the FEM circuitry 808 may include a Tx/Rx switch to switch between transmit mode and receive mode operation. The FEM circuitry 808 may include a receive signal path and a transmit signal path. The receive signal path of the FEM circuitry 808 may include a low-noise amplifier (LNA) to amplify received RF signals and provide the amplified received RF signals as an output (e.g., to the RF circuitry 806). The transmit signal path of the FEM circuitry 808 may include a power amplifier (PA) to amplify input RF signals (e.g., provided by the RF circuitry 806), and one or more filters to generate RF signals for subsequent transmission (e.g., by one or more of the one or more antennas 810).

In some embodiments, the UE 800 may include additional elements such as, for example, a memory/storage, display, camera, sensor, and/or input/output (I/O) interface as described in more detail below. In some embodiments, the UE 800 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or another device that may receive and/or transmit information wirelessly. In some embodiments, the UE 800 may include one or more user interfaces designed to enable user interaction with the system and/or peripheral component interfaces designed to enable peripheral component interaction with the system. For example, the UE 800 may include one or more of a keyboard, a keypad, a touchpad, a display, a sensor, a non-volatile memory port, a universal serial bus
(USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 810 may comprise one or more directional or omnidirectional antennas, including, for example, dipole antennas, monopole antennas, patch antennas, loop antennas, microstrip antennas, or other types of antennas suitable for transmission of RF signals. In some multiple-input multiple-output (MIMO) embodiments, the antennas 810 may be effectively separated to benefit from spatial diversity and the different channel characteristics that may result.

Although the UE 800 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as oilier circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform, specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general -purpose hardware processor configured using software, the general-purpose hardware processor may be configured as respective different modules at different times. Software may accordingly configure a hardware processor, for example, to constitute a particular module at one instance of time and to constitute a different module at a different instance of time.

While the communication device-readable medium is illustrated as a single medium, the term "communication device-readable medium" may include a single medium or multiple media (e.g., a centralized or distributed database, and/or associated caches and servers) configured to store the one or more instructions.

The term, "communication device-readable medium" may include any medium that is capable of storing, encoding, or carrying instructions for execution by the communication device and that cause the communication device to perform any one or more of the techniques of the present disclosure, or that is capable of storing, encoding, or carrying data structures used by or associated with such instructions. Non-limiting communication device-readable medium examples may include solid-state memories, and optical and magnetic media. Specific examples of communication device- readable media may include: non-volatile memory, such as semiconductor memory devices (e.g., EPROM, Electrically Erasable Programmable Read-Only Memory (EEPROM)) and flash memory devices; magnetic disks, such as internal hard disks and removable disks; magneto-optical disks; RAM; and CD-ROM and DVD-ROM disks. In some examples, communication device-readable media may include non-transitory communication device-readable media. In some examples, communication device-readable media may include communication device- readable media that is not a transitory propagating signal.

The instructions may further be transmitted or received over a communications network using a transmission medium via a network interface device utilizing any one of a number of transfer protocols (e.g., frame relay, internet protocol (IP), transmission control protocol (TCP), user datagram protocol (UDP), hypertext transfer protocol (HTTP), etc.). Example communication networks may include a LAN, a WAN, a packet data network (e.g., the Internet), mobile telephone networks (e.g., cellular networks), Plain 03d Telephone (POTS) networks, and wireless data networks (e.g., Institute of Electrical and Electronics Engineers (IEEE) 602.11 family of standards known as Wi-Fi®, IEEE 602.16 family of standards known as WiMax®), IEEE 602.15.4 family of standards, a Long Term Evolution (LTE) family of standards, a Universal Mobile Telecommunications System (UMTS) family of standards, or peer-to-peer (P2P) networks, among others. In an example, the network interface de vice may include one or more physical jacks (e.g., Ethernet, coaxial, or phone jacks) or one or more antennas to connect to the communications network. In an example, the network interface device may include a plurality of antennas to wirelessly communicate using single-input multiple-output (SIMO), MLMO, or multiple-input single-output (MISO) techniques. In some examples, the network interface device may wirelessly communicate using Multiple User MIMO techniques. The term "transmission medium" shall be taken to include any intangible medium that is capable of storing, encoding, or carrying instructions for execution by the communication device, and includes digital or analog communications signals or other intangible media to facilitate communication of such software.

In some systems, an eNB may have multiple antennas that may be used in various groupings and with various signal modifications for each grouping to produce a plurality of APs. Each AP may be defined for one or more antennas. Each AP may correspond to a different transmission signal direction. Using the different APs, the eNB may transmit multiple layers with code book-based or non-codebook-based precoding techniques. Each AP may correspond to a beam that transmits AP-specific CSI-RS signals. The UE may contain a plurality of receive antennas that may be used selectively to create Rx beamforming. Rx beamforming may be used to increase the receive antenna (beamforming) gain for the direction(s) on which desired signals are received, and to suppress interference from neighboring cells. Fast Rx beam refinement, in which the Rx beam direction is dynamically adjusted in response to the channel conditions measured by the UE, is desirable from a performance standpoint.

This may be particularly desirable with use of the high-frequency- bands around, for example, 28GHz, 37GHz, 39GHz, and 64-71GHz, used in conjunction with carrier aggregation, which may permit networks to continue to service the never-ending hunger for data delivery. The increased beamforming gain in this frequency range may permit the UE and eNB to compensate for the increasingly likely event of severe pathloss and suppress mutual user interference, leading to an increase in system capacity and coverage.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read only memory (ROM), RAM, magnetic disk storage media, optical storage media, flash-memory devices, and other storage devices and media. Some embodiments may include one or more processors and may be configured with instructions stored on a computer-readable storage device.

## Claims

1. An apparatus of a user equipment, UE, (302) the apparatus comprising:
a memory configured to store a resume identity information element, IE; and
processing circuitry in communication with the memory and arranged to:
encode and send (338) a request to resume a radio resource control, RRC, connection, the request to resume the RRC connection comprising the resume identity, ID, IE;
receive (340) and decode an RRC connection setup response to the request to resume the RRC connection, wherein the RRC connection setup response indicates that an RRC connection resume has been fallbacked; and
in response to the RRC connection setup response, encode and send an RRC connection setup complete message (342), wherein the RRC connection setup complete message comprises a System Architecture Evolution, SAE, Temporary Mobile Subscriber Identity, S-TMSI, for use by a mobility management entity, MME, (322) in communicating a modify bearer request to a serving gateway, S-GW.

2. The apparatus of claim 1, wherein the processing circuitry is further arranged to transition to an RRC idle state in response to suspension of the RRC connection prior to encoding the request to resume the RRC connection; wherein the resume ID IE is stored in the memory of the UE as a stored resume ID in response to suspension of the RRC connection.

3. The apparatus of claim 2 wherein the resume ID IE comprises a truncated resume ID.

4. The apparatus of claim 2 wherein the stored resume ID is discarded in response to decoding of the RRC connection setup; and wherein the RRC connection resume is fallbacked in response to context information at an evolved node B, eNB, (304) associated with the resume ID IE being unavailable at the eNB.

5. The apparatus of claim 1, wherein the RRC connection resume is fallbacked in response to context information at an eNB associated with the resume ID IE being past a time limit threshold at the eNB.

6. The apparatus of claim 1, wherein the resume ID IE is stored in a non-transitory storage memory prior to the request to resume the RRC connection.

7. The apparatus of claim 1, wherein the RRC connection setup complete message is configured to be relayed from the UE to an eNB, and from the eNB to the MME, (322) for the eNB to fetch a set of context information from the MME using the S-TMSI; and
wherein the processing circuitry is further configured to manage cellular narrowband Internet of Things, CIoT, communications from the eNB as configured, at least in part, using the set of context information from the MME.

8. The apparatus of claims 1-5, wherein the UE is configured to select between a legacy operation, a control plane operation, and a user plane operation prior to encoding the request to resume the RRC connection.

9. The apparatus of claims 1-5, wherein the resume ID comprises a shorted media access control identifier, MAC ID, conveyed as an establishment clause sent over signal radio bearer, SRB, O prior to encoding the request to resume the RRC connection.

10. The apparatus of claims 1-5, further comprising:
an antenna coupled to the processing circuitry, wherein the antenna is configured to transmit the request to resume the RRC connection and the RRC connection setup complete message to an evolved node B, eNB, and further configured to receive the RRC connection setup response from the eNB;
wherein the antenna is further configured to transmit and receive using 180 kilohertz radio frequency bandwidth operation corresponding to a single physical resource block bandwidth.

11. A non-transitory computer-readable medium comprising instructions that, when executed by an apparatus of a user equipment, UE, cause one or more processors of the apparatus to:
encode and send (338) a request to resume a radio resource control, RRC, connection, the request to resume the RRC connection comprising a resume identity, ID, information element, IE;
receive and decode (340) an RRC connection setup response to the request to resume the RRC connection, wherein the RRC connection setup response indicates that an RRC connection resume has been fallbacked; and
in response to the RRC connection setup response, encode and send (342) an RRC connection
setup complete message, wherein the RRC connection setup complete message comprises a System Architecture Evolution, SAE, Temporary Mobile Subscriber Identity, S-TMSI, for use by a mobility management entity, MME, in communicating a modify bearer request to a serving gateway, S-GW.

12. The non-transitory computer-readable medium of claim 11, wherein the instructions further cause the apparatus to:
transition to an RRC idle state in response to suspension of the RRC connection prior to encoding the request to resume the RRC connection, wherein the resume ID IE is stored in the memory of the UE as a stored resume ID in response to suspension of the RRC connection, and wherein the resume ID IE comprises a truncated resume ID.

13. An apparatus of an evolved node B, eNB, the apparatus comprising:
memory; and
processing circuitry in communication with the memory and arranged to:
receive and decode (338) a request to resume a radio resource control, RRC, connection from a first user equipment, UE, the request to resume the RRC connection comprising a resume identity, ID, information element, IE, associated with the first UE;
in response to the request to resume the RRC connection from the first UE, encode and send (340) an RRC connection setup response to the request to resume the RRC connection, wherein the RRC connection setup response indicates that an RRC connection resume has been fallbacked; and
receive and decode (342) an RRC connection setup complete message from the first UE,
wherein the RRC connection setup complete message comprises a System Architecture Evolution, SAE, Temporary Mobile Subscriber Identity, S-TMSI, associated with the first UE;
encode and send (344) a communication comprising the S-TMSI,for transmission to a mobility management entity, for use by the MME, in communicating a modify bearer request to a serving gateway, S-GW;
storage memory configured to store resume ID IEs associated with corresponding UEs.

14. The apparatus of claim 13, wherein the memory is configured to store the resume ID IE.

## Patentansprüche

1. Vorrichtung einer Benutzervorrichtung, UE, (302), wobei die Vorrichtung umfasst:
einen Speicher, der konfiguriert ist, um ein Fortsetzungs-Identitätsinformationselement, IE, zu speichern; und
eine Verarbeitungsschaltung, die mit dem Speicher kommuniziert und eingerichtet ist zum:
Kodieren und Senden (338) einer Anforderung zur Fortsetzung einer RRC-Radio-Resource-Control-Verbindung, wobei die Anforderung zur Fortsetzung der RRC-Verbindung die Fortsetzungs-Identität, ID, IE, umfasst;
Empfangen (340) und Dekodieren einer RRC-Verbindungsaufbau-Antwort auf die Anforderung zum Fortsetzen der RRC-Verbindung, wobei die RRC-Verbindungsaufbau-Antwort anzeigt, dass eine RRC-Verbindungs-Fortsetzung rückgängig gemacht wurde; und
als Antwort auf die RRC-Verbindungsaufbau-Antwort, Kodieren und Senden einer RRC-Verbindungsaufbau-Vollendungsnachricht (342), wobei die RRC-Verbindungsaufbau-Vollendungsnachricht eine System Architecture Evolution, SAE, Temporary Mobile Subscriber Identity, S-TMSI, zur Verwendung durch eine Mobilitätsmanagement-Einheit, MME, (322) bei der Übermittlung einer Modifizierungs-Trägeranforderung an ein Serving Gateway, S-GW, umfasst.

2. Vorrichtung nach Anspruch 1, wobei die Verarbeitungsschaltung ferner eingerichtet ist, um als Antwort auf die Unterbrechung der RRC-Verbindung in einen RRC-Idle-Zustand überzugehen, bevor sie die Anforderung zur Fortsetzung der RRC-Verbindung kodiert;
wobei die Fortsetzungs-ID IE als Antwort auf die Unterbrechung der RRC-Verbindung in dem Speicher des UE als eine gespeicherte Fortsetzungs-ID gespeichert wird.

3. Vorrichtung nach Anspruch 2, wobei die Fortsetzungs-ID IE eine abgeschnittene Fortsetzungs-ID umfasst.

4. Vorrichtung nach Anspruch 2, wobei die gespeicherte Fortsetzungs-ID als Antwort auf die Decodierung des RRC-Verbindungsaufbaus verworfen wird; und
wobei die RRC-Verbindungsfortsetzung als Antwort darauf, dass Kontextinformationen an einer evolved Node B, eNB, (304), die mit der Fortsetzungs-ID-IE verbunden sind, an der eNB nicht verfügbar sind, verworfen wird.

5. Vorrichtung nach Anspruch 1, wobei die RRC-Verbindungsfortsetzung als Antwort darauf, dass Kontextinformationen an einer eNB, die der Fortsetzungs-ID-IE zugeordnet sind, einen Zeitlimit-Schwellenwert an der eNB überschritten haben, zurückgestellt wird.

6. Vorrichtung nach Anspruch 1, wobei die Fortsetzungs-ID-IE in einem nichttransitorischen Speicher vor der Anforderung zur Fortsetzung der RRC-Verbindung gespeichert wird.

7. Vorrichtung nach Anspruch 1, wobei die RRC-Verbindungsaufbau-vollendet-Nachricht konfiguriert ist, um von der UE an einer eNB und von der eNB an das MME weitergeleitet zu werden (322), damit die eNB einen Satz von Kontextinformationen von dem MME unter Verwendung der S-TMSI abruft; und
wobei die Verarbeitungsschaltung ferner konfiguriert ist, um zelluläre Schmalband-Internet-der-Dinge-Kommunikation-CIoT von der eNB zu verwalten, wie es zumindest teilweise unter Verwendung des Satzes von Kontextinformationen von dem MME konfiguriert ist.

8. Vorrichtung nach Anspruch 1-5, wobei die UE konfiguriert ist, um zwischen einem Legacy-Betrieb, einem Steuerebenen-Betrieb und einem Benutzerebenen-Betrieb auszuwählen, bevor es die Anforderung zur Fortsetzung der RRC-Verbindung kodiert.

9. Vorrichtung nach Anspruch 1-5, wobei die Fortsetzungs-ID einen verkürzten Media Access Control Identifier, MAC-ID, umfasst, der als eine Aufbauklausel übermittelt wird, die über Signalradioträger, SRB, O gesendet wird, bevor die Anforderung zur Fortsetzung der RRC-Verbindung kodiert wird.

10. Vorrichtung nach den Ansprüchen 1-5, ferner umfassend:
eine Antenne, die mit der Verarbeitungsschaltung gekoppelt ist, wobei die Antenne konfiguriert ist, um die Anforderung zum Fortsetzen der RRC-Verbindung und die RRC-Verbindungsaufbau-vollendet-Nachricht an einer evolved Node B, eNB, zu senden, und ferner konfiguriert ist, um die RRC-Verbindungsaufbau-Antwort von der eNB zu empfangen;
wobei die Antenne ferner konfiguriert ist zum Senden und Empfangen unter Verwendung eines 180-Kilohertz-Funkfrequenzbandbreitenbetriebs entsprechend einer einzelnen physikalischen Ressourcenblockbandbreite.

11. Nichtflüchtiges computerlesbares Medium, das Anweisungen umfasst, die, wenn sie von einer Vorrichtung einer Benutzervorrichtung, UE, ausgeführt werden, einen oder mehrere Prozessoren der Vorrichtung veranlassen zum:
Kodieren und Senden (338) einer Anforderung zur Fortsetzung einer RRC-Radio-Resource-Control-Verbindung, wobei die Anforderung zur Fortsetzung der RRC-Verbindung ein Fortsetzungs-Identitäts-, ID-, Informationselement, IE, umfasst;
Empfangen und Dekodieren (340) einer RRC-Verbindungsaufbau-Antwort auf die Anforderung zum Fortsetzen der RRC-Verbindung, wobei die RRC-Verbindungsaufbau-Antwort anzeigt, dass eine RRC-Verbindungs-Fortsetzung rückgängig gemacht wurde; und
als Antwort auf die RRC-Verbindungsaufbau-Antwort, Kodieren und Senden (342) einer RRC-Verbindungsaufbau-Vollendungsnachricht, wobei die RRC-Verbindungsaufbau-Vollendungsnachricht eine System Architecture Evolution, SAE, Temporary Mobile Subscriber Identity, S-TMSI, zur Verwendung durch eine Mobilitätsmanagementeinheit, MME, bei der Kommunikation einer Modifizierungs-Trägeranforderung an ein Serving Gateway, S-GW, umfasst.

12. Nichtflüchtiges computerlesbares Medium nach Anspruch 11, wobei die Anweisungen ferner die Vorrichtung veranlassen zum:
Übergehen in einen RRC-Idle-Zustand als Antwort auf die Unterbrechung der RRC-Verbindung vor dem Kodieren der Anforderung zur Fortsetzung der RRC-Verbindung, wobei die Fortsetzungs-ID-IE in dem Speicher der UE als eine gespeicherte Fortsetzungs-ID als Antwort auf die Unterbrechung der RRC-Verbindung gespeichert wird, und wobei die Fortsetzungs-ID-IE eine abgeschnittene Fortsetzungs-ID umfasst.

13. Vorrichtung einer evolved Node B, eNB, wobei die Vorrichtung umfasst:
einen Speicher; und
eine Verarbeitungsschaltung, die mit dem Speicher kommuniziert und eingerichtet ist zum:
Empfangen und Dekodieren (338) einer Anforderung zum Fortsetzen einer Funkressourcensteuerungs-, RRC-, Verbindung von einer ersten Benutzervorrichtung, UE, wobei die Anforderung zum Fortsetzen der RRC-Verbindung ein Fortsetzungs-Identitäts-, ID-, Informationselement, IE, umfasst, das der ersten UE zugeordnet ist;
als Antwort auf die Anforderung zur Fortsetzung der RRC-Verbindung von der ersten UE, Kodieren und Senden (340) einer RRC-Verbindungsaufbau-Antwort auf die Anforderung zur Fortsetzung der RRC-Verbindung, wobei die RRC-Verbindungsaufbau-Antwort anzeigt, dass eine RRC-Verbindungs-Fortsetzung zurückgefallen ist; und
Empfangen und Dekodieren (342) einer RRC-Verbindungsaufbau-Vollendungsnachricht von der ersten UE, wobei die RRC-Verbindungsaufbau-Vollendungsnachricht eine System Architecture Evolution, SAE, Temporary Mobile Subscriber Identity, S-TMSI, umfasst, die der ersten UE zugeordnet ist;
Kodieren und Senden (344) einer Mitteilung, die die S-TMSI umfasst, zur Übertragung an eine Mobilitätsverwaltungseinheit, zur Verwendung durch die MME bei der Übermittlung einer Modifizierungs-Trägeranforderung an ein bedienendes Gateway, S-GW;
einen Speicher, der konfiguriert ist, um Fortsetzungs-ID-IEs zu speichern, die mit entsprechenden UEs verbunden sind.

14. Vorrichtung nach Anspruch 13, wobei der Speicher konfiguriert ist, um die Fortsetzungs-ID-IE zu speichern.

## Revendications

1. Un appareil d'un équipement utilisateur, UE, (302) l'appareil comprenant :
une mémoire configurée pour stocker un élément d'information, IE, d'identité de reprise ; et
un ensemble de circuits de traitement en communication avec la mémoire et agencé pour :
coder et envoyer (338) une requête de reprise d'une connexion de contrôle de ressources radio, RRC, la requête de reprise de la connexion RRC comprenant l'IE d'identité, ID, de reprise ;
recevoir (340) et décoder une réponse d'établissement de connexion RRC à la requête de reprise de la connexion RRC, la réponse d'établissement de connexion RRC indiquant qu'une reprise de connexion RRC a été effectuée en mode de repli ; et
en réponse à la réponse d'établissement de connexion RRC, coder et envoyer un message d'achèvement d'établissement de connexion RRC (342), dans lequel le message d'achèvement d'établissement de connexion RRC comprend une identité d'abonné mobile temporaire, S-TMSI, de type Évolution d'architecture système, SAE, destinée à être utilisée par une entité de gestion de la mobilité, MME, (322), dans la communication d'une requête de bearer de modification à une passerelle de desserte, S-GW.

2. L'appareil selon la revendication 1, dans lequel l'ensemble de circuits de traitement est en outre agencé pour passer à un état de veille RRC en réponse à la suspension de la connexion RRC avant de coder la requête de reprise de la connexion RRC ;
dans lequel l'IE d'ID de reprise est stocké dans la mémoire de l'UE en tant qu'ID de reprise stockée en réponse à la suspension de la connexion RRC.

3. L'appareil selon la revendication 2, dans lequel l'IE d'ID de reprise comprend une ID de reprise tronquée.

4. L'appareil selon la revendication 2, dans lequel l'ID de reprise stockée est abandonnée en réponse au décodage de l'établissement de connexion RRC ; et
dans lequel la reprise de connexion RRC est effectuée en mode de repli en réponse à une information de contexte au niveau d'un nœud B évolué, eNB, (304) associée à l'IE d'ID de reprise qui est indisponible au niveau de l'eNB.

5. L'appareil selon la revendication 1, dans lequel la reprise de connexion RRC est effectuée en mode de repli en réponse à une information de contexte au niveau d'un eNB associée à l'IE d'ID de reprise qui a dépassé un seuil de limite de temps au niveau de l'eNB.

6. L'appareil selon la revendication 1, dans lequel l'IE d'ID de reprise est stocké dans une mémoire de stockage non transitoire avant la requête de reprise de la connexion RRC.

7. L'appareil selon la revendication 1, dans lequel le message d'achèvement d'établissement de connexion RRC est configuré pour être relayé de l'UE à un eNB, et de l'eNB à la MME, (322), pour que l'eNB cherche un jeu d'informations de contexte provenant la MME en utilisant la S-TMSI ; et
dans lequel l'ensemble de circuits de traitement est en outre configuré pour gérer des communications cellulaires en bande étroite de l'Internet des objets, CIoT, à partir de l'eNB tel qu'il est configuré, au moins en partie, en utilisant le jeu d'informations de contexte provenant de la MME.

8. L'appareil selon les revendications 1 à 5, dans lequel l'UE est configuré pour choisir entre une opération héritée, une opération de plan de contrôle, et une opération de plan utilisateur avant de coder la requête de reprise de la connexion RRC.

9. L'appareil selon les revendications 1 à 5, dans lequel l'ID de reprise comprend un identifiant de contrôle d'accès au support, MAC ID, raccourci transporté en tant que clause d'établissement envoyée sur un bearer radio de signal, SRB, O, avant de coder la requête de reprise de la connexion RRC.

10. L'appareil selon les revendications 1 à 5, comprenant en outre :
une antenne couplée à l'ensemble de circuits de traitement, dans lequel l'antenne est configurée pour transmettre la requête de reprise de la connexion RRC et le message d'achèvement d'établissement de connexion RRC à un nœud B évolué, eNB, et configurée en outre pour recevoir la réponse d'établissement de connexion RRC à partir de l'eNB ;
dans lequel l'antenne est en outre configurée pour transmettre et recevoir en utilisant une opération de bande passante de radiofréquence de 180 kilohertz correspondant à une bande passante de bloc de ressource physique unique.

11. Un support non transitoire lisible par calculateur comprenant des instructions qui, lorsqu'elles sont exécutées par un appareil d'un équipement utilisateur, UE, amènent un ou plusieurs processeurs de l'appareil à :
coder et envoyer (338) une requête de reprise d'une connexion de contrôle de ressources radio, RRC, la requête de reprise de la connexion RRC comprenant un élément d'information, IE, d'identité, ID, de reprise ;
recevoir et décoder (340) une réponse d'établissement de connexion RRC à la requête de reprise de la connexion RRC, la réponse d'établissement de connexion RRC indiquant qu'une reprise de connexion RRC a été effectuée en mode de repli ; et
en réponse à la réponse d'établissement de connexion RRC, coder et envoyer (342) un message d'achèvement d'établissement de connexion RRC, dans lequel le message d'achèvement d'établissement de connexion RRC comprend une identité d'abonné mobile temporaire, S-TMSI, de type Évolution d'architecture système, SAE, destinée à être utilisée par une entité de gestion de la mobilité, MME, dans la communication d'une requête de bearer de modification à une passerelle de desserte, S-GW.

12. Le support lisible par calculateur non-transitoire selon la revendication 11, dans lequel les instructions amènent en outre l'appareil à :
passer à un état de veille RRC en réponse à la suspension de la connexion RRC avant de coder la requête de reprise de la connexion RRC, l'IE d'ID de reprise étant stocké dans la mémoire de l'UE en tant qu'ID de reprise stockée en réponse à la suspension de la connexion RRC, et l'IE d'ID de reprise comprenant une ID de reprise tronquée.

13. Un appareil d'un nœud B évolué, eNB, l'appareil comprenant :
une mémoire ; et
un ensemble de circuits de traitement en communication avec la mémoire et agencé pour :
recevoir et décoder (338) une requête de reprise d'une connexion de contrôle de ressources radio, RRC, provenant d'un premier équipement utilisateur, UE, la requête de reprise de la connexion RRC comprenant un élément d'information, IE, d'identité, ID, de reprise, associé au premier UE ;
en réponse à la requête de reprise de la connexion RRC provenant du premier UE, coder et envoyer (340) une réponse d'établissement de connexion RRC à la requête de reprise de la connexion RRC, la réponse d'établissement de connexion RRC indiquant qu'une reprise de connexion RRC a été effectuée en mode de repli ; et
recevoir et décoder (342) un message d'achèvement d'établissement de connexion RRC provenant du premier UE, le message d'achèvement d'établissement de connexion RRC comprenant une identité d'abonné mobile temporaire, S-TMSI, de type Évolution d'architecture système, SAE, associée au premier UE ;
coder et envoyer (344) une communication comprenant la S-TMSI, pour transmission à une entité de gestion de la mobilité, destinée à être utilisée par la MME, dans la communication d'une requête de bearer de modification à une mémoire de stockage de passerelle de desserte configurée pour stocker des IE d'ID de reprise associés à des UE correspondants.

14. L'appareil selon la revendication 13, dans lequel la mémoire est configurée pour stocker l'IE d'ID de reprise.
